# EUROPEAN PATENT SPECIFICATION

(11) **EP 2 202 095 B1**
(45) Date of publication and mention of the grant of the patent: **16.01.2013**
(21) Application number: 09178638.4
(22) Date of filing: 10.12.2009
(51) Int. Cl.: B60C 9/26, B60C 19/00

(54) **Pneumatic tire**
Luftreifen
Pneu

(30) Priority: 19.12.2008 US 339585
(43) Date of publication of application: 30.06.2010
(73) Proprietor: The Goodyear Tire & Rubber Company, Akron, OH 44316-0001 (US)
(72) Inventor: Georges, Francois Pierre Charles, 4970, Stavelot (BE); Gillard, Jean-Michel Alphonse Fernand, B-6700, Arlon (BE); Krier, Roland Willibrord, L-6834, Biwer (LU); Mathonet, Vincent Benoit, 6720, Habay-la-Neuve (BE); Nicolas, Bernard Robert, B-6700, Arlon (Bonnert) (BE)
(74) Representative: Kutsch, Bernd

(56) References cited:
- EP-A2- 0 501 782

## Description

### Field of the Invention

This invention relates to a pneumatic tire having a carcass and a belt reinforcing structure, and, more particularly, to radial ply tires for use in aircraft, trucks and other high load applications.

### Background of the Invention

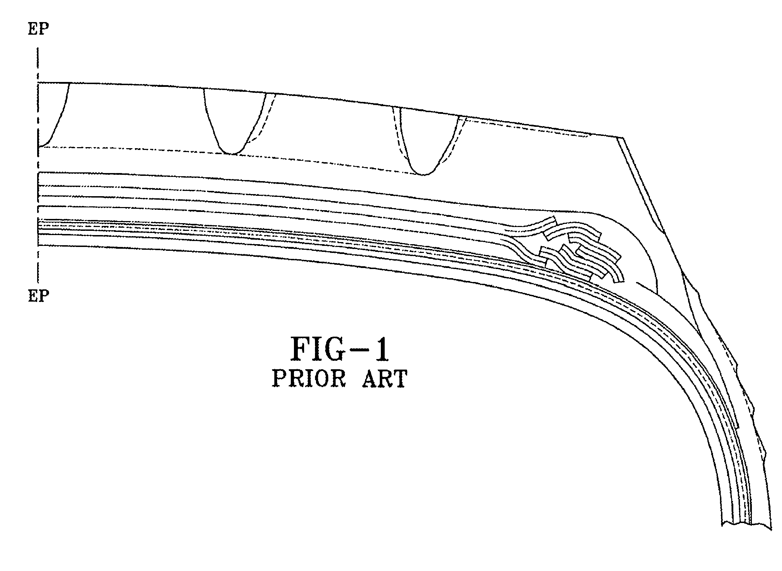

In tires that have heavy loads such as truck tires or aircraft tires, zigzag belt layers have been utilized for the belt package. Zigzag belt layers eliminate working belt endings at the shoulder. An exemplary portion of a tire with a zigzag belt layer is shown in Figure 1. The advantage of zigzag belt layers is that there are no working belt edges near the shoulder, which greatly improves tire durability. The disadvantage to zigzag belt layers is that at the edges near the shoulder, there are overlapping layers. In some areas there are too many layers, such as four or more layers typically, and even six or more layers in some locations. The reduction of overlapping strips in the shoulder area has been shown to improve durability. Thus it is desired to have a tire with improved belt edge durability without excess weight.

EP-A- 0 501 782 describes a pneumatic tire comprising a tread, a carcass and a zigzag belt structure interposed between the carcass and the tread.

### Summary of the Invention

The invention relates to a tire according to claim 1.

Dependent claims refer to preferred embodiments of the invention.

In one aspect of the invention, the strip forming the zigzag belt structure is layed up in a first zigzag winding extending from a first lateral belt edge to a second lateral belt edge in a zigzag wavelength having a first amplitude W1 followed by a second amplitude W2 in the opposite direction of said first amplitude, wherein the strip forming the zigzag belt structure is layed up in a second zigzag winding extending from a first lateral belt edge to a second lateral belt edge in a zigzag wavelength having a first amplitude followed by a second amplitude in the opposite direction of said first amplitude.

The number of zigzag waves per winding is N ≤ 1.

Preferably, the first and second zigzag windings each have turns at the first and second lateral edges, wherein the strip at each edge are extended in a circumferential direction for a distance L.

The first zigzag winding may be alternated with the second zigzag winding or may be not alternated with the second zigzag winding.

In one aspect of the invention, the belt at each edge is radiused.

In yet another aspect of the invention the belt at each edge extends in a substantially circumferential direction for a specified distance L.

In yet another aspect of the invention the zigzag belt structure has a first belt edge in a first winding, and a second belt edge in a second winding, wherein the midpoint of the fist belt edge is circumferentially offset from the midpoint of the second belt edge.

In yet another aspect of the invention, the zigzag belt structure is formed from a first zigzag winding having a first amplitude Wmax at a first lateral end and a second amplitude Wmin at a second lateral end, and Wmax is greater than Wmin, and a second zigzag winding having a first amplitude Wmin at a first lateral end and a second amplitude Wmax at a second lateral end, and wherein the second zigzag winding is located adjacent said first zigzag winding.

The zigzag belt structure may further comprise a third zigzag winding having a first amplitude Wmax at a first lateral end and a second amplitude Wmin at a second lateral end, wherein the first and second lateral ends of the third windings are circumferentially offset from the first and second lateral ends of the first zigzag winding and the second zigzag winding, respectively.

The zigzag belt structure may further comprise a fourth zigzag winding having a first amplitude Wmin at a first lateral end, and a second amplitude Wmax at a second lateral end, wherein the first and second lateral ends of the fourth zigzag windings are each circumferentially offset from the first and second lateral ends of the first zigzag winding and the second zigzag winding, respectively.

The tire in accordance with the invention preferably is a truck tire or a radial medium truck tire.

### Definitions

"Aspect ratio" of the tire means the ratio of its section height (SH) to its section width (SW) multiplied by 100% for expression as a percentage.
"Axial" and "axially" mean lines or directions that are parallel to the axis of rotation of the tire.
"Bead" means that part of the tire comprising an annular tensile member wrapped by ply cords and shaped, with or without other reinforcement elements such as flippers, chippers, apexes, toe guards and chafers, to fit the design rim.
"Carcass" means the tire structure apart from the belt structure, tread, undertread, and sidewall rubber over the plies, but including the beads.
"Circumferential" means lines or directions extending along the perimeter of the surface of the annular tread perpendicular to the axial direction.
"Cord" means one of the reinforcement strands which the plies in the tire comprise.
"Equatorial plane (EP)" means the plane perpendicular to the tire's axis of rotation and passing through the center of its tread.
"Winding" means the pattern of the strip formed in a first revolution of the strip around a tire building drum, tire or core.

### Brief Description of the Drawings

FIG. 1 is a schematic sectional view of part of a prior art tire having a zigzag belt;
FIG. 2 illustrates a partial cross-section of an exemplary radial tire 10 of the present invention;
FIG. 3 is an example of a tire building drum showing the belt of the present invention being formed;
FIG. 4A is an example of a tire building drum layed out circumferentially for illustration purposes illustrating a first full revolution of the strip layup forming the zigzag belt;
FIG. 4B is the tire building drum of FIG. 4A illustrating only a second revolution of the cord pattern of the zigzag belt (the first revolution was removed for clarity);
FIG. 4C is a closeup view of the strip at the belt edge undergoing a U turn;
FIG. 5A is an example of a tire building drum layed out circumferentially for illustration purposes illustrating a first full revolution or first winding of the strip layup forming the zigzag belt for the specific case of 1 zigzag per drum revolution;
FIG. 5B is the tire building drum of FIG. 5A illustrating the second revolution of the drum showing the first and second winding of the strip layup forming the zigzag belt for the specific case of 1 zigzag per drum revolution;
FIG. 5C is the tire building drum of FIG. 5A illustrating the third revolution of the drum showing the first, second and third winding of the strip layup forming the zigzag belt;
FIG. 5D is the tire building drum of FIG. 5A illustrating the fourth revolution of the drum showing the first, second, third and fourth winding of the strip layup forming the zigzag belt for the specific case of 1 zigzag per drum revolution;
FIG. 6 illustrates the zigzag belt edge;
FIG. 7 illustrates a cross-sectional view of the zigzag belt edge at sections A-A, B-B, C-C, D-D and E-E showing the estimated overlap of layers;
FIG. 8 illustrates a cross-sectional view of the zigzag belt edge at sections A-A, B-B, C-C, D-D and E-E showing the estimated overlap of layers for the prior art zigzag belt of Fig. 1;
FIGS. 9A-9C illustrate a zigzag belt having a traverse offset of .1 mm, and wherein the drum offset angle is varied from 6.75 deg shown in Fig. 9A, to 13.5 deg shown in Fig. 9B, and 27 deg shown in Fig. 9c;
FIGS. 10A-10C illustrate a zigzag belt having a traverse offset of 8 mm, and wherein the drum offset angle is varied from 6.75 deg shown in Fig. 10A, to 13.5 deg shown in Fig. 10B, and 27 deg shown in Fig. 10C;

### Detailed Description of an Example Embodiment the Invention

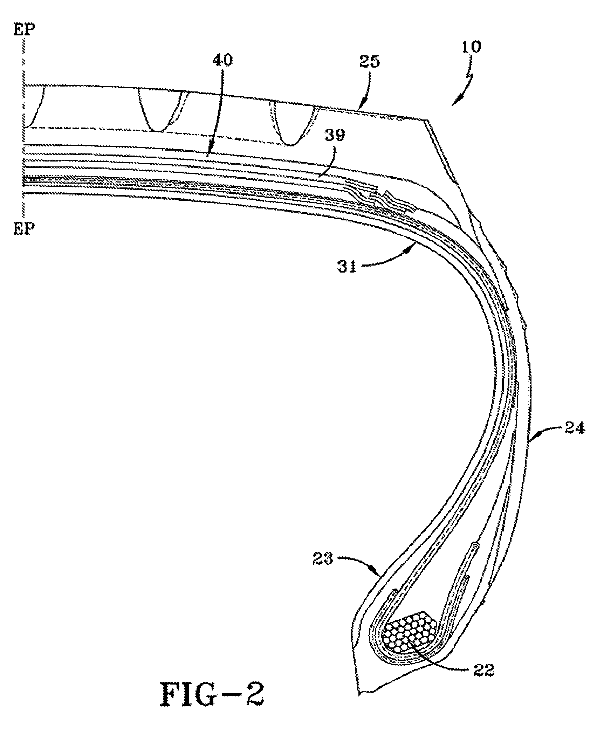

FIG. 2 illustrates a partial cross-section of an exemplary radial tire 10 which includes a bead portion 23 having a bead core 22 embedded therein, a sidewall portion 24 extending radially outward from the bead portion 23, and a cylindrical tread portion 25 extending between radially outer ends of the sidewall portions 24. The tire 10 is reinforced by a carcass 31 toroidally extending from one bead portion 23 to the other bead portion (not shown). The carcass 31 may include at least one carcass ply. The carcass ply is anchored to the bead core and for example, may wind around each bead core 22 from inside of the tire 10 away from the equatorial plane EP to form turnup portions. A belt structure 40 is arranged between the carcass 31 and the tread portion 25.

The belt structure 40, according to an example embodiment of the present invention, comprises one or more belts, wherein at least one belt is a zigzag belt structure 39. The zigzag belt structure 39 has a zigzag layup pattern to reduce the number of layers at the tire shoulder. The layup of the zigzag belt structure is described as follows.

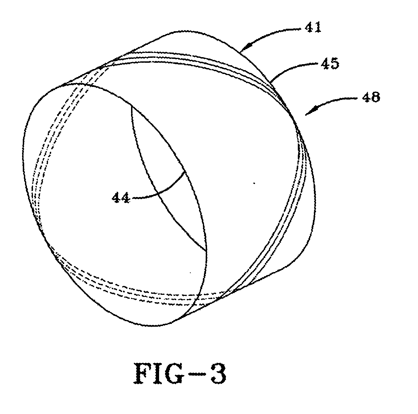

Figure 3 illustrates a tire building drum 48 having axial circumferential edges 44, 45. In order to form the modified zigzag belt structure 39 on the tire building drum, the tire building drum is rotated as a rubberized strip 41, 51, 52, 53, 54 of cord is wound around the drum in a generally circumferential direction, extending in an alternating fashion from one drum edge 44 to the other drum edge 45.

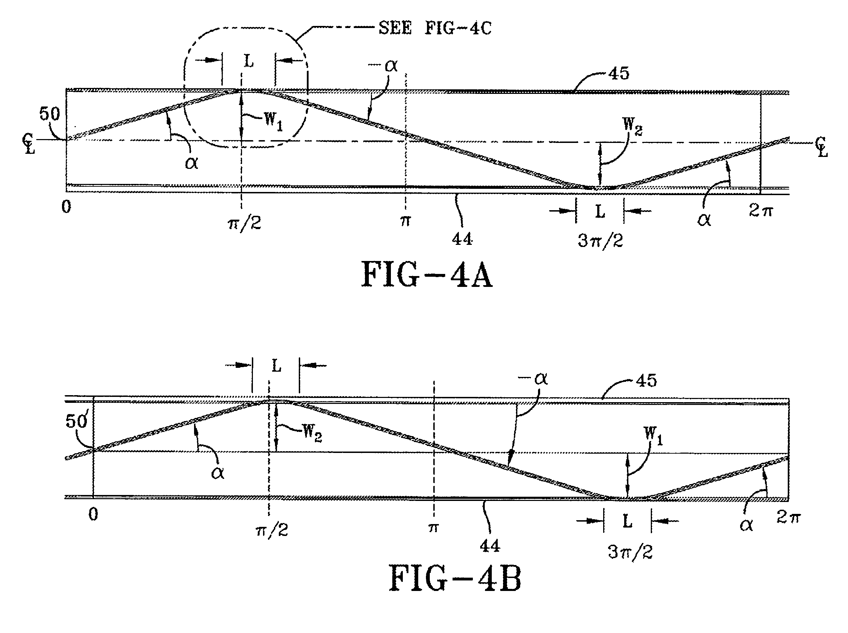

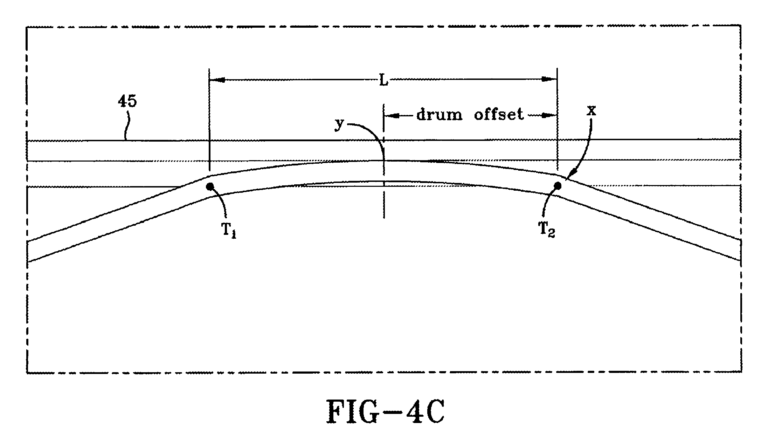

Figures 4a and 4b illustrate the tire building drum wherein the circumference of the drum is laid out flat, from 0 radians (degrees) to 2π radians (360 deg). Figure 4a illustrates a first winding for a first drum revolution of the zigzag belt being formed on the drum. The invention may also be formed on a core or tire, and is not limited to being formed on a tire building drum. For illustration purposes, the initial starting point 50 will be the mid-circumferential centerplane of the drum at 0 radians, however any starting point location may be used. The strip is first angled at an angle α to the edge 45 of the tire building drum. This correlates to a location of about π/2 radians for 1 zigzag per revolution. The following description illustrates the pattern for 1 zigzag wave per revolution, and is not limited to same, as the zigzag wave per revolution. At the edge 45 of the tire building drum, the strip has a first axial width or amplitude W1, as measured from the center or mid-circumferential plane of the drum. Next, the strip may optionally continue for a distance L in a circumferential (0 degree) direction at the edge 44. As shown in Fig. 4c, the strip is preferably U turned without sharp angles, and preferably is radiused at the transition points T1 and T2. As shown in FIG. 4A, the strip is then angled at - α towards the opposite drum edge 44. At about 3/2 π radians, the strip has a second axial width or amplitude W2, which is measured from the centerplane, and is different than W1. W1 is preferably greater than W2. Thus the strip does not extend completely to the axial end 44 of the drum. Next, the strip may be optionally oriented in a substantially circumferential direction (0 degrees) for a circumferential distance L. Finally, the strip is angled towards the mid-circumferential centerplane at an angle α. The strip reaches the mid-circumferential centerplane at about 2π radians.

The layup of the strip for a second winding is shown in Fig. 4b. For the sake of clarity, the first winding has been removed. The starting point 50' of the second winding has been axially indexed a desired amount, depending upon the amount of gap between successive strips desired. For illustration purposes, the second winding of the strip is indexed a strip width so it abuts with the first winding. Starting at 50', the strip is first angled at an angle α to the edge 45 of the tire building drum. This correlates to a location of about π/2 radians for one zigzag per revolution. At this location, the strip has an axial width or amplitude W2, as measured from the center or mid-circumferential plane of the drum. Next, the strip may optionally continue for a distance L in a circumferential (about 0 degree) direction at the edge 44. As shown in Fig. 4c, the strip is preferably turned at the drum edge without sharp angles, and preferably is radiused at the transition points T1, T2. As shown in FIGS. 4b and 4C, the strip is then angled from the transition point T2 at - α towards the opposite drum edge 44. At about 3/2 π radians, the strip has an axial width or amplitude W1. Next, the strip may optionally be oriented in a circumferential direction (about 0 degrees) for a circumferential distance L. As shown in Fig. 4C, the strip is preferably turned at the drum edge without sharp angles, and preferably is radiused at the transition points T1, T2. Finally, the strip is angled towards the mid-circumferential centerplane at an angle α. The strip reaches the mid-circumferential centerplane at 2π radians.

Thus in a first strip winding, the strip traversed from the starting point to a first amplitude W1, then to a second amplitude W2, and then back to the starting point. W1 and W1 are in opposite directions from the centerplane, and W₁≠ W₂, and preferably W₁ > W₂. Then in a second strip winding, the strip traversed from an indexed starting point to a first amplitude W2, then to a second amplitude W1, and then back to the starting point. Thus the strip windings preferably abut, but may also be overlapped or be spaced apart. The strip may also be offset circumferentially at the edges, alone, or in combination with the variable amplitude zigzag pattern.

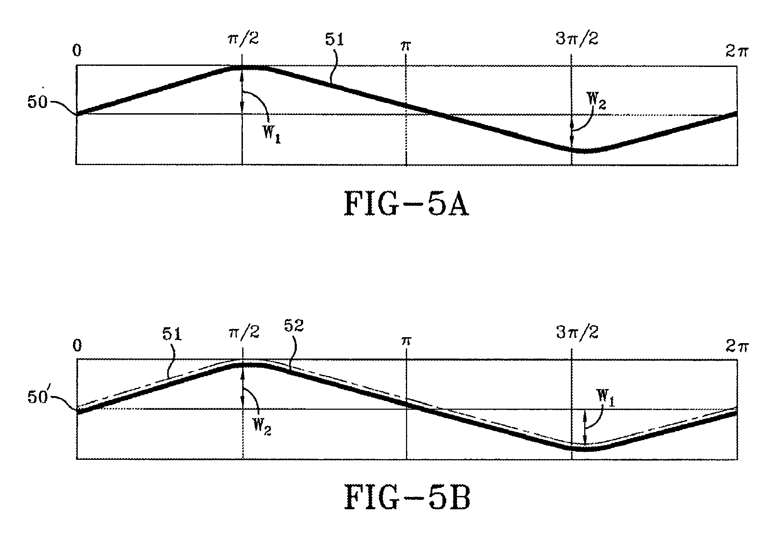

A third embodiment of the invention is now described. Figure 5A illustrates a first winding of the strip having a first amplitude W1 followed by a second amplitude W2 in the opposite direction. Figure 5B illustrates a second winding of the strip wherein the strip has a first amplitude W2 followed by a second amplitude W1 in the opposite direction. The second winding has been indexed a desired distance from the first winding, and thus may abut (as shown), overlap or be spaced apart.

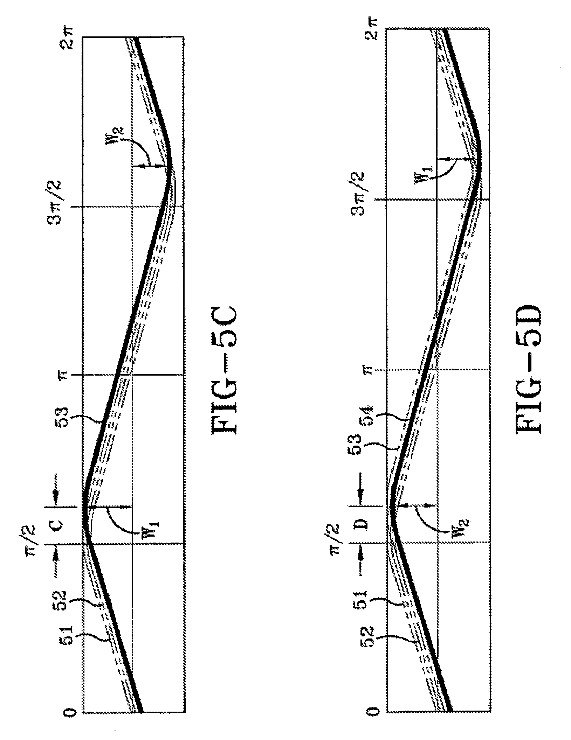

Figure 5C illustrates a third winding of the strip, wherein the strip winding has been circumferentially shifted or offset from the previous two windings of strip, so that the turn at the edge is offset from the edges of the previous windings. Just past the π/2 location an offset distance C, the strip has a W1 amplitude and a W2 amplitude just past the 3 π/2 location. Figure 5D illustrates a fourth strip winding, wherein the strip is also circumferentially offset from the first, second windings, in order to reduce the belt strip gauge at the outer belt edge. As shown, just past the π /2 location at an offset distance D, the strip has a first amplitude W2 and a second amplitude W1 at an offset distance D. The offset distance D is different than the offset distance C. Preferably, the offset distance D is less than the offset distance C. In order to form the complete belt layer, the sequence as described is repeated until the belt layer is formed.

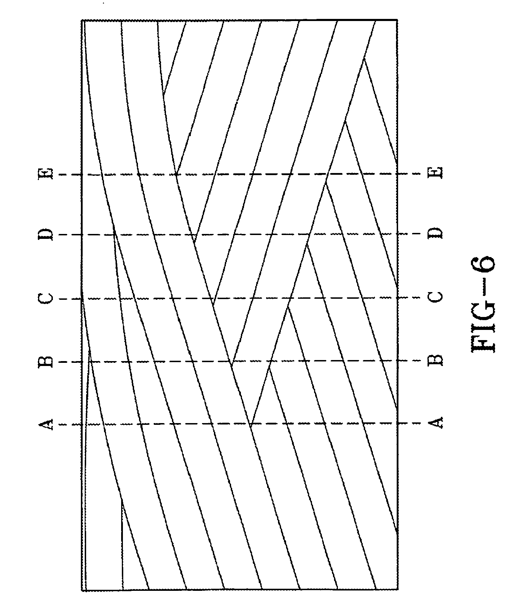

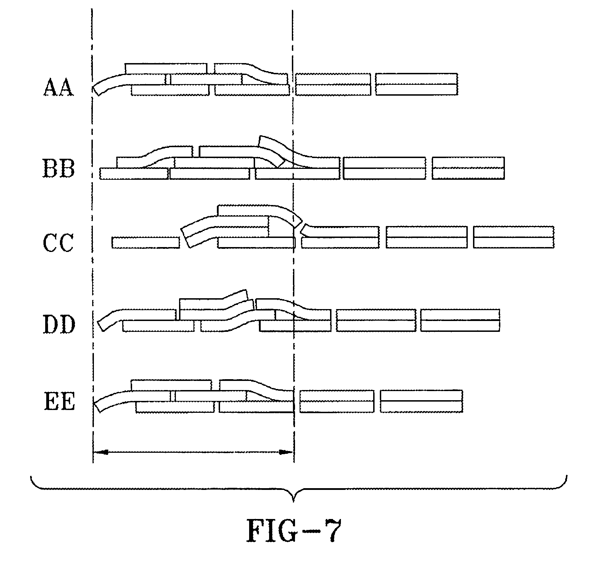

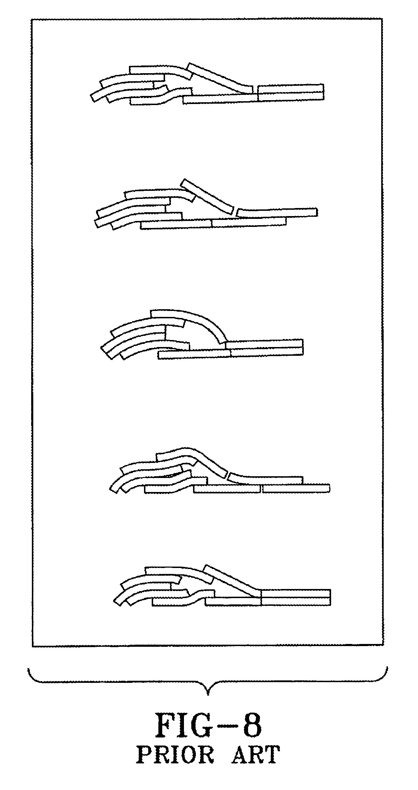

Figure 6 illustrates a 1 zigzag wave per revolution belt in the area near the belt edge having multiple layers of strips. Figure 7 illustrates the cross-sectional views of the belt edge taken at various locations A-A through E-E. As shown, the amount of strip overlap varies from about one layer to a maximum of 4 layers in section C-C. Figure 8 illustrates the prior art zigzag belt layup where there are up to six layers overlapping each other. Thus the belt configuration of the present invention has reduced the number of overlapping layers which are believed to reduce tire durability.

The strip is formed of a rubberized ribbon of one or more cords. The width of the strip may vary, and may be for example, 5-14 mm wide, and more preferably 10-13 mm wide. The cord reinforcements may be formed of nylon, polyester, aramid or steel. All of the above exemplary embodiments were illustrated with one zigzag wave per one drum revolution. The invention may also include N zigzag waves per one drum revolution, wherein N is 0.25 or greater. The invention as described above may also abut the strips, thus having no gap in spacing of consecutive windings. Alternatively, the successive winding of strips may be overlapped from about 1 % to about 100% of the strip width, preferably 5% to 30% or 10% to 30% of the strip width. Alternatively, the successive winding of strips may have a gap distance G formed therebetween. G may vary from 1 % to 200% of the strip width, preferably 20 to 100% or 30 to 80% of the strip width.

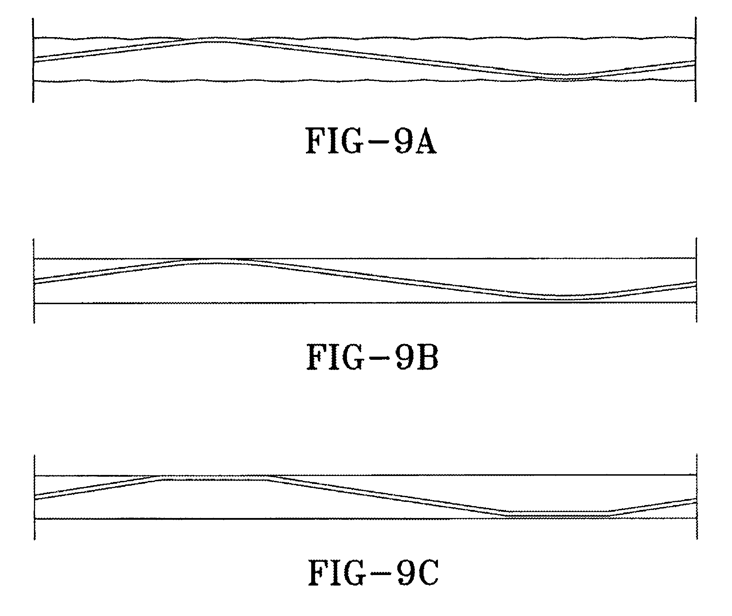

Another variable which may be utilized is the drum offset, which is best shown in Fig. 4c. The drum offset is the circumferential distance of the drum (measured in degrees or radians) from the strip edge at point Y to point X. In other words, the drum offset is half the circumferential distance over which the strip does a U-turn, as measured from the point Y closest to the edge, to the point X where the turn is completed. The drum offset or turning distance can be varied, effectively elongating the edge in the circumferential direction if increased, or resulting in a sharper turning angle if decreased. For example, the drum offset may range from 5 degrees to 30 degrees, and more preferably from 10 to 16 degrees. As the drum offset increases, the angle of the strip α also increases. Figures 9A-9C illustrates a strip layed upon the drum in a one zigzag per drum revolution. Figure 9A illustrates a drum offset of 6.75 degrees, resulting in an α of 6.65 degrees. Figure 9B illustrates a drum offset of 13.5 degrees, resulting in an α of 7.22 degrees. Figure 9C illustrates a drum offset of 27 degrees, resulting in an α of 8.76 degrees. As can be seen from a review of all of the figures, as the drum offset distance is increased, the angle at the turnaround elongates along the edge and results in a smoother pass. The increase in drum offset also results in a slighter higher α. As the drum offset is increased, the amount of overlap of layers of the strip increases from 2.83 in Fig. 9A, to 3.87 in Fig. 9B, and over 6 in Fig. 9C.

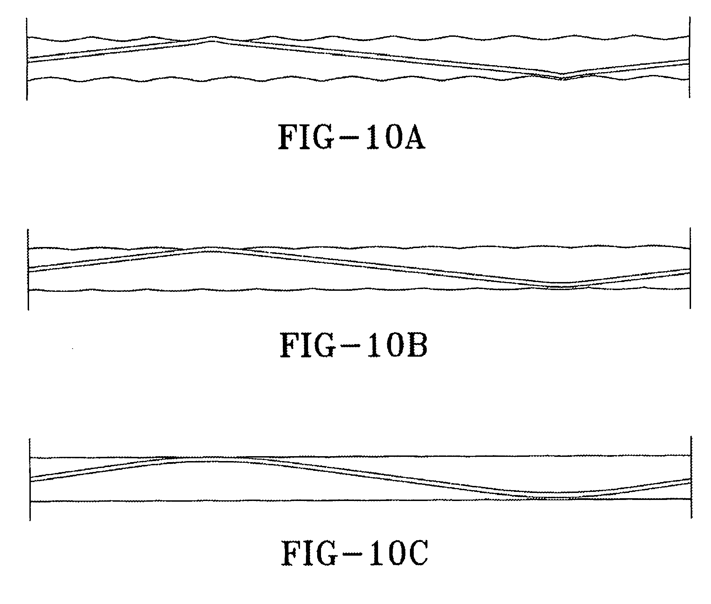

Another variable which may be utilized is the traverse offset. The traverse offset is the axial distance of the belt edge from the edge of the drum edge, in mm. By increasing the traverse offset, the strip starts to turn earlier, and can result in uneven belt edges as shown in Figures 10a and 10b, as compared to Figures 9a and 9b. Figures 10A-10C illustrate an 8 mm traverse offset. Figure 10A illustrates a drum offset of 6.75 degrees, resulting in an α of 5.96 degrees. Figure 10B illustrates a drum offset of 13.5 degrees, resulting in an α of 6.48 degrees. Figure 10C illustrates a drum offset of 27 degrees, resulting in an α of 7.18 degrees. The effect of decreasing the traverse offset results in a belt with more even or smoother edges and a slight reduction in the circumferential angle α in the strip.

## Claims

1. A pneumatic tire comprising a tread (25), a carcass (31) and a zigzag belt structure (39) interposed between the carcass (31) and the tread (25), wherein the zigzag belt structure (39) comprises or is formed of at least two layers of cords interwoven together from a strip (41, 51, 52, 53, 54) of rubber reinforced with one or more cords, wherein the strip (41, 51, 52, 53, 54) is layed up in a first zigzag winding extending between a first lateral belt edge and a second lateral belt edge in an at least substantially zigzag or sine wavelength having a first amplitude (W1) in a first direction followed by a second amplitude (W2) in the opposite direction of the first amplitude (W1), and wherein the strip (41, 51, 52, 53, 54) is layed up in a second zigzag winding extending between the first lateral belt edge and the second lateral belt edge in an at least substantially zigzag or sine wavelength having a first amplitude followed by a second amplitude in the opposite direction of said first amplitude; **characterized in that** the zigzag belt structure (39) has N zigzag waves per winding wherein N is ≤ 1.

2. The pneumatic tire of claim 1 wherein the second zigzag winding abuts the first zigzag winding.

3. The pneumatic tire of claim 1 or 2 wherein the first and second zigzag windings each have turns at or close to the first and second lateral edges (44, 45); and/or wherein the strip (41, 51, 52, 53, 54) at or close to each lateral belt edge (44, 45) is extended in a circumferential or substantially circumferential direction for a distance L, wherein L is preferably in a range of from 5 to 80 mm such as from 20 to 60 mm.

4. The pneumatic tire of at least one of the previous claims wherein the first zigzag winding is alternated with the second zigzag winding.

5. The pneumatic tire of at least one of the previous claims wherein the zigzag belt structure (39) is radiused at each lateral belt edge (44, 45).

6. The pneumatic tire of at least one of the previous claims wherein the zigzag belt structure (39) extends to a first belt edge point at or close to a lateral belt edge (44, 45) in a first winding and to a second belt edge point at or close to this lateral belt edge (44, 45) in a second winding, and wherein the first belt edge point is circumferentially offset a distance (C, D) from the second belt edge point, the offset distance preferably being in a range of from 5 to 120 mm such as from 10 to 60 mm.

7. The pneumatic tire of claim 1 wherein N is ≤ 0.5 such as 0.25.

8. The pneumatic tire of claim 1 wherein the zigzag belt structure (39) further comprises a third zigzag winding having a first amplitude (Wₘₐₓ) at a first lateral end and a second amplitude (Wₘᵢₙ) at a second lateral end, wherein the first and second lateral ends of the third winding are circumferentially offset from the first and second lateral ends of the first zigzag winding and the second zigzag winding, respectively.

9. The pneumatic tire of claim 8 wherein the zigzag belt structure (39) further comprises a fourth zigzag winding having a first amplitude (Wₘₐₓ) at a first lateral end, and a second amplitude (Wₘᵢₙ) at a second lateral end, wherein the first and second lateral ends of the fourth zigzag winding are each circumferentially offset from the first and second lateral ends of the first zigzag winding and the second zigzag winding, respectively.

10. The tire of claim 8 or 9 wherein the first through third or first through fourth zigzag windings are repeated in order until the zigzag belt structure (39) is formed.

11. The tire of at least one of the previous claims wherein the strip is a continuous strip (41, 51, 52, 53, 54), preferably a single continuous strip (41, 51, 52, 53, 54) forming the whole zigzag belt structure (39).

12. The tire of at least one of the previous claims wherein the strip (41, 51, 52, 53, 54) has a lateral width in a range of from 5 to 40 mm, alternatively in a range (41, 51, 52, 53, 54) of from 9 mm to 20 mm or from 12 mm to 16 mm; and/or wherein the strip is reinforced with steel cord or aramid cord.

13. The tire of at least one of the previous claims wherein the tire (10) further comprises a helically wound circumferential belt layer.

14. The tire of claim 1 wherein the tire is a truck tire.

## Patentansprüche

1. Luftreifen, umfassend eine Lauffläche (25), eine Karkasse (31) und eine zwischen der Karkasse (31) und der Lauffläche (25) eingefügte Zickzack-Gürtelstruktur (39), wobei die Zickzack-Gürtelstruktur (39) mindestens zwei Lagen von Korden umfasst oder aus diesen gebildet ist, welche aus einem Streifen (41, 51, 52, 53, 54) aus Gummi, verstärkt mit einem oder mehr Korden, miteinander verwoben sind, wobei der Streifen (41, 51, 52, 53, 54) in einer ersten Zickzackwicklung aufgelegt ist, die sich zwischen einer ersten seitlichen Gürtelkante und einer zweiten seitlichen Gürtelkante in einer mindestens im Wesentlichen Zickzack- oder Sinus-Wellenlänge erstreckt, die eine erste Amplitude (W1) in einer ersten Richtung aufweist, gefolgt von einer zweiten Amplitude (W2) in der entgegengesetzten Richtung zu der ersten Amplitude (W1), und wobei der Streifen (41, 51, 52, 53, 54) in einer zweiten Zickzackwicklung aufgelegt ist, die sich zwischen der ersten seitlichen Gürtelkante und der zweiten seitlichen Gürtelkante in einer mindestens im Wesentlichen Zickzack- oder Sinus-Wellenlänge erstreckt, die eine erste Amplitude aufweist, gefolgt von einer zweiten Amplitude in der entgegengesetzten Richtung zu dieser ersten Amplitude; **dadurch gekennzeichnet, dass** die Zickzack-Gürtelstruktur (39) N Zickzackwellen je Wicklung aufweist, wobei N ≤ 1 ist.

2. Luftreifen nach Anspruch 1, wobei die zweite Zickzackwicklung an die erste Zickzackwicklung angrenzt.

3. Luftreifen nach Anspruch 1 oder 2, wobei die erste und die zweite Zickzackwicklung jeweils Wendungen an oder dicht an der ersten und zweiten Seitenkante (44, 45) aufweisen; und/oder wobei der Streifen (41, 51, 52, 53, 54) an oder dicht an jeder seitlichen Gürtelkante (44, 45) in einer umfangsgerichteten oder im Wesentlichen umfangsgerichteten Richtung um einen Abstand L ausgedehnt ist, wobei L bevorzugt in einem Bereich von 5 bis 80 mm, wie etwa von 20 bis 60 mm, liegt.

4. Luftreifen nach mindestens einem der vorgenannten Ansprüche, wobei die erste Zickzackwicklung mit der zweiten Zickzackwicklung abgewechselt ist.

5. Luftreifen nach mindestens einem der vorgenannten Ansprüche, wobei die Zickzack-Gürtelstruktur (39) an jeder seitlichen Gürtelkante (44, 45) abgerundet ist.

6. Luftreifen nach mindestens einem der vorgenannten Ansprüche, wobei die Zickzack-Gürtelstruktur (39) sich zu einem ersten Gürtelkantenpunkt an oder dicht an einer seitlichen Gürtelkante (44, 45) in einer ersten Wicklung und zu einem zweiten Gürtelkantenpunkt an oder dicht an dieser seitlichen Gürtelkante (44, 45) in einer zweiten Wicklung erstreckt, und wobei der erste Gürtelkantenpunkt in Umfangsrichtung um einen Abstand (C, D) von dem zweiten Gürtelkantenpunkt versetzt ist, wobei der Versatzabstand bevorzugt in einem Bereich von 5 bis 120 mm, wie etwa von 10 bis 60 mm, liegt.

7. Luftreifen nach Anspruch 1, wobei N ≤ 0,5 ist, wie etwa 0,25.

8. Luftreifen nach Anspruch 1, wobei die Zickzack-Gürtelstruktur (39) weiter eine dritte Zickzackwicklung umfasst, die eine erste Amplitude (Wₘₐₓ) an einem ersten seitlichen Ende und eine zweite Amplitude (Wₘᵢₙ) an einem zweiten seitlichen Ende aufweist, wobei das erste und zweite seitliche Ende der dritten Wicklung von den ersten und zweiten seitlichen Enden der ersten Zickzackwicklung beziehungsweise der zweiten Zickzackwicklung in Umfangsrichtung versetzt sind.

9. Luftreifen nach Anspruch 8, wobei die Zickzack-Gürtelstruktur (39) weiter eine vierte Zickzackwicklung umfasst, die eine erste Amplitude (Wₘᵢₙ) an einem ersten seitlichen Ende und eine zweite Amplitude (Wₘₐₓ) an einem zweiten seitlichen Ende aufweist, wobei das erste und zweite seitliche Ende der vierten Zickzackwicklung jedes von den ersten und zweiten seitlichen Enden der ersten Zickzackwicklung beziehungsweise der zweiten Zickzackwicklung in Umfangsrichtung versetzt sind.

10. Reifen nach Anspruch 8 oder 9, wobei die erste bis einschließlich dritte oder erste bis einschließlich vierte Zickzackwicklung der Reihe nach wiederholt werden, bis die Zickzack-Gürtelstruktur (39) gebildet ist.

11. Reifen nach mindestens einem der vorgenannten Ansprüche, wobei der Streifen ein kontinuierlicher Streifen (41, 51, 52, 53, 54) ist, bevorzugt ein einziger kontinuierlicher Streifen (41, 51, 52, 53, 54), der die gesamte Zickzack-Gürtelstruktur (39) bildet.

12. Reifen nach mindestens einem der vorgenannten Ansprüche, wobei der Streifen (41, 51, 52, 53, 54) eine seitliche Breite in einem Bereich von 5 bis 40 mm, alternativ in einem Bereich (41, 51, 52, 53, 54) von 9 mm bis 20 mm oder von 12 mm bis 16 mm aufweist; und/oder wobei der Streifen mit Stahlkord oder Aramidkord verstärkt ist.

13. Reifen nach mindestens einem der vorgenannten Ansprüche, wobei der Reifen (10) weiter eine schraubenförmig gewickelte umfangsgerichtete Gürtellage umfasst.

14. Reifen nach Anspruch 1, wobei der Reifen ein Lastkraftwagenreifen ist.

## Revendications

1. Bandage pneumatique comprenant une bande de roulement (25), une carcasse (31) et une structure de ceinture en zigzag (39) intercalée entre la carcasse (31) et la bande de roulement (25), dans lequel la structure de ceinture en zigzag (39) comprend ou est réalisée à partir d'au moins deux couches de câblés entrelacés les uns dans les autres à partir d'une bande (41, 51, 52, 53, 54) de caoutchouc renforcé avec un ou plusieurs câblés, dans lequel la bande (41, 51, 52, 53, 54) est déposée dans un premier enroulement en zigzag s'étendant entre un premier bord latéral de ceinture et un deuxième bord latéral de ceinture sous la forme d'une longueur d'onde au moins essentiellement en zigzag ou sinusoïdale possédant une première amplitude (W1) dans une première direction, suivie d'une deuxième amplitude (W2) dans la direction opposée à celle de la première amplitude (W1), et dans lequel la bande (41, 51, 52, 53, 54) est déposée dans un deuxième enroulement en zigzag s'étendant entre un premier bord latéral de ceinture et un deuxième bord latéral de ceinture sous la forme d'une longueur d'onde au moins essentiellement en zigzag ou sinusoïdale possédant une première amplitude dans une première direction, suivie d'une deuxième amplitude dans la direction opposée à celle de la première amplitude, **caractérisée en ce que** la structure de ceinture en zigzag (39) possède N ondes en zigzag par enroulement, N étant égal ou inférieur à 1.

2. Bandage pneumatique selon la revendication 1, dans lequel le deuxième enroulement en zigzag vient buter contre le premier enroulement en zigzag.

3. Bandage pneumatique selon la revendication 1 ou 2, dans lequel le premier et le deuxième enroulement en zigzag possèdent chacun des spires qui viennent se disposer contre le premier et le deuxième bord latéral (44, 45) ou à proximité desdits bords ; et/ou dans lequel la bande (41, 51, 52, 53, 54) contre chaque bord latéral de ceinture (44, 45) ou à proximité dudit bord s'étend dans une direction circonférentielle ou essentiellement circonférentielle sur une distance L, la valeur de L se situant de préférence dans la plage de 5 à 80 mm, par exemple de 20 à 60 mm.

4. Bandage pneumatique selon au moins une des revendications précédentes, dans lequel le premier enroulement en zigzag alterne avec le deuxième enroulement en zigzag.

5. Bandage pneumatique selon au moins une des revendications précédentes, dans lequel la structure de ceinture en zigzag (39) est arrondie à chaque bord latéral de ceinture (44, 45).

6. Bandage pneumatique selon au moins une des revendications précédentes, dans lequel la structure de ceinture en zigzag (39) s'étend jusqu'à un premier endroit marginal de ceinture contre le bord latéral de ceinture (44, 45) ou à proximité dudit bord dans un premier enroulement et jusqu'à un deuxième endroit marginal de ceinture contre le bord latéral de ceinture (44, 45) ou à proximité dudit bord dans un deuxième enroulement, et dans lequel le premier endroit marginal de ceinture est décalé en direction circonférentielle d'une distance (C, D) du deuxième endroit marginal de ceinture, la distance de décalage se situant de préférence dans la plage de 5 à 120 mm, par exemple de 10 à 60 mm.

7. Bandage pneumatique selon la revendication 1, dans lequel N est inférieur ou égal à 0,5, par exemple égal à 0,25.

8. Bandage pneumatique selon la revendication 1, dans lequel la structure de ceinture en zigzag (39) comprend en outre un troisième enroulement en zigzag possédant une première amplitude (Wmax) à une première extrémité latérale et une deuxième amplitude (Wmin) à une deuxième extrémité latérale, la première et la deuxième extrémité latérale du troisième enroulement étant décalées en direction circonférentielle de la première et de la deuxième extrémité latérale du premier enroulement en zigzag et du deuxième enroulement en zigzag, respectivement.

9. Bandage pneumatique selon la revendication 8, dans lequel la structure de ceinture en zigzag (39) comprend en outre un quatrième enroulement en zigzag possédant une première amplitude (Wmin) à une première extrémité latérale et une deuxième amplitude (Wmax) à une deuxième extrémité latérale, la première et la deuxième extrémité latérale du quatrième enroulement étant décalées en direction circonférentielle de la première et de la deuxième extrémité latérale du premier enroulement en zigzag et du deuxième enroulement en zigzag, respectivement.

10. Bandage pneumatique selon la revendication 8 ou 9, dans lequel on répète du premier au troisième ou du premier au quatrième enroulement en zigzag dans l'ordre jusqu'à ce que l'on obtienne la structure de ceinture en zigzag (39).

11. Bandage pneumatique selon au moins une des revendications précédentes, dans lequel la bande est une bande continue (41, 51, 52, 53, 54), de préférence une bande continue unique (41, 51, 52, 53, 54) formant l'ensemble de la structure de ceinture en zigzag (39).

12. Bandage pneumatique selon au moins une des revendications précédentes, dans lequel la bande (41, 51, 52, 53, 54) possède une largeur latérale dans la plage de 5 à 40 mm, en variante dans la plage de 9 mm à 20 mm ou de 12 mm à 16 mm ; et/ou dans lequel la bande est renforcée avec un câblé en acier ou un câblé en aramide.

13. Bandage pneumatique selon au moins une des revendications précédentes, dans lequel le bandage pneumatique (10) comprend en outre une couche de ceinture circonférentielle à enroulement hélicoïdal.

14. Bandage pneumatique selon la revendication 1, dans lequel le bandage pneumatique est un bandage pneumatique pour camion.
